# EUROPEAN PATENT SPECIFICATION

(11) **EP 1 053 099 B1**
(45) Date of publication and mention of the grant of the patent: **14.08.2002**
(21) Application number: 99903479.6
(22) Date of filing: 29.01.1999
(51) Int. Cl.: B32B 27/18, B32B 27/04, B32B 29/00, D21H 27/26, H01B 1/20

(54) **HUMIDITY INDEPENDENT STATIC DISSIPATIVE LAMINATE**
FEUCHTIGKEITSABHÄNGIGER STATISCHE ELEKTRIZITÄT ZERSTREUENDER SCHICHTSTOFF
STRATIFIE DISSIPATEUR D'ELECTRICITE STATIQUE INDEPENDANT DE L'HUMIDITE

(30) Priority: 02.02.1998 US 17476
(43) Date of publication of application: 22.11.2000
(73) Proprietor: INTERNATIONAL PAPER COMPANY, Odenton, MD 21113-1397 (US)
(72) Inventor: PRASAD, Srikanth, R., Pasadena, MD 21122 (US); FRANZOI, Eric, A., Pasadena, MD 21122 (US); LEX, Joseph, Pasadena, MD 21122 (US)
(74) Representative: Abrams, Michael John
(86) International application number: US9901927
(87) International publication number: WO9938686

(56) References cited:
- WO-A-93/20280
- US-A- 4 724 187
- US-A- 4 784 908
- DATABASE WPI Section Ch, Week 8918 Derwent Publications Ltd., London, GB; Class A21, AN 89-134896 XP002103444 & JP 01 080526 A (SUMITOMO BAKELITE CO) , 27 March 1989
- DATABASE WPI Section Ch, Week 8528 Derwent Publications Ltd., London, GB; Class A32, AN 85-167776 XP002103445 & JP 60 096452 A (IBIDEN CO LTD) , 30 May 1985
- DATABASE WPI Section Ch, Week 9441 Derwent Publications Ltd., London, GB; Class A32, AN 94-330690 XP002103446 & JP 62 018264 A (DAINIPPON INSATSU KK) , 27 January 1987

## Description

The invention relates to static dissipative, high pressure decorative laminates; particularly such laminates which maintain the ability to effectively dissipate static electricity even at low relative humidities.

For several years, going back at least to the early 1980s, the need has existed for static dissipative work surfaces for use in various environments. Attention is invited to USP 4,784,908 (Ungar '908); USP 5,275,876 (O'Dell '876) and USP 5,244,721 (Wyche '721). While static dissipative laminates made in accordance with these prior US patents in general have excellent static dissipative properties, a continuing problem has been a serious reduction in static dissipative properties as relative humidity decreases.

The U.S. Department of Defense defines the following relationship between static electrical properties and surface resistivity (in ohms/square or simply ohms):
Anti-static: greater than 10⁹.
Static dissipative: between 10⁶ and 10⁹.
Conductive: less than 10⁶.
Surface resistivity of standard high pressure decorative laminate is about 10¹¹ to 10¹³ ohms/square. As shown in Table 4 of Ungar '908, one example according to said patent had a surface resistivity which varied between 10¹⁰ ohms at 17% relative humidity and 1.4 X 10⁸ ohms at 50% relative humidity. In another example according to Ungar '908 as shown in Table 5, the surface resistivity varied between 4 X 10⁹ ohms at 10% relative humidity and 1.6 X 10⁸ ohms at 50% relative humidity.

A static dissipative laminate having a surface resistivity on the order of about 10⁶ to 10⁹ ohms is needed for a work surface for the assembly of electronic components. Losses of electronic components attributable to electrostatic discharge have in the past amounted to tens of millions of dollars each year. Typically a tray or tote bin of electronic components such as integrated circuit chips, microcomputers, transistors, etc., in simply being moved around, can pick a charge of thousands of volts, and in cases where the air has a low relative humidity, the voltage can reach 30,000 volts. When a so-charged component is touched or put down, the charge is suddenly discharged, destroying or damaging the electronic component.

For this reason, electronic components are typically packaged in conductive containers. Workers wear special conductive clothing and shoes, and are grounded via wrist bands and floor mats. Air is conditioned and ionized. Even so, a worker whose hand is kept at zero potention by a grounded wrist wrap can "zap" such an electronic component when he picks it up. However, if the table top upon which the tote bin is placed is static dissipative and connected to a ground, then the 30,000 volts of charge will leak off the components before the worker touches them.

Thus, an important link in the chain of protection in the manufacture of electronic components against damage from electrostatic discharge during assembly, repair and use is the work surface. It is important that this work top not be conductive, but instead be in the static dissipative range of between about 10⁶ and 10⁹ ohms, and all work tops of less than 10⁶ ohms resistance are grounded through a 10⁶ ohms resistor. If the work top has a resistance of less than 10⁶ ohms, it becomes a safety hazard for electric shock, a path for current between components, and it discharges too rapidly which may result in damage to the electronic component.

While the static dissipative, high pressure decorative laminates of the above-mentioned patents function very well, there is a need for improved performance, and particularly for more uniformity of surface resistivity regardless of relative humidity. Thus, surface resistivity tends to shoot up in the winter when the relative humidity drops. In spite of the improvements provided by the aforementioned U.S. patents, the surface resistivity of static dissipative, high pressure decorative laminates can change several orders of magnitude between 50% relative humidity and 10% relative humidity.

Attempts to control surface resistivity have in the past focused on the incorporation of conductive particles into the upper surface of the laminate. For example, the incorporation of carbon particles in laminate paper was tried, but as pointed out in the background section of the above-noted Ungar '908, this expedient was unsatisfactory, sometimes resulting in dusting of conducting material from the surface of the laminate as it wears, which conductive material by itself will result in damage due to electrical short circuits. In addition, the color of these laminates is limited to black, which can provide human engineering problems. Conductive particles other than carbon black also tend to obscure the pattern or color of the decor sheet and thus reduce the attractiveness of the decorative laminate.

Electroconductive particles other than pure metals and carbon black are known and commonly used as additives for thermoplastic resins to impart static dissipative properties. These conductive fillers are sometimes referred to as antistats. These products can be purchased from, among others, Dupont under the trademark Zelec ECP electroconductive powders in the form of antimony-doped tin oxide powders or antimony-doped tin oxide coatings on inert extended powder or flake cores. Other conductive antimony-doped tin oxide powders are sold under the name STANOSTATS by Magnesium Elektron, Inc., of Flemington, New Jersey.

Static dissipative surfaces are available in materials other than high pressure decorative laminates, e.g. sse U.S. patents 5,284,705; 5,626,975; 4,571,361 and 5,418,056. While products of this type are useful in certain environments, high pressure decorative laminates which meet the stringent requirements of the National Electrical Manufacturer's Association (NEMA), the only products which can legally be called "high pressure decorative laminates", are highly desired as work product surfaces because of their ability to fulfill a large number of other requirements, including chemical resistance, heat resistance, water resistance, stain resistance, abrasion resistance, etc. The surfaces provided by the patents mentioned immediately above, while providing electric conductivity or anti-static properties, do not possess the other desirable properties of high pressure decorative laminates.

The recently issued USP 5,677,039 discloses the manufacture of decorative paper, which may be used in the manufacture of laminates, and which paper is indicated as being capable of dissipating electrostatic charges independent of humidity. This paper is said to be made by incorporating, during manufacture of the paper on the papermaking machine, particles having a lamellar structure coated with tin oxide doped with antimony. Alternatively, the paper may be coated after its formation with a composition comprising the antimony-doped tin oxide coated flakes in a hydrosoluble binder or latex such as polyvinyl alcohol or starch. However, such paper presents two main problems:

First and most important, such paper, when impregnated with a laminating resin such as melamine resin, and pressed into laminate, will inevitably have an impenetrable cured melamine resin surface coating which acts as an insulating layer to inhibit discharge of static electricity therethrough if the paper is made by incorporating the doped metal oxide flakes into the paper during the papermaking purpose. It is impractical in any event to incorporate these flakes into the paper during paper manufacture, because these doped metal oxides are very expensive, and there is a serious problem of retention of these particles during the papermaking process, with a good proportion of these particles passing through the screen and becoming either lost with consequent pollution problems, or requiring a costly recovery step.

On the other hand, if such paper of USP '039 is made by applying the doped metal oxide coated flakes as a coating in a binder of starch, polyvinyl alcohol or the like, there will be limited penetration of the conductive flakes into the body of the paper; as a consequence, when the paper is then impregnated with thermosettable resin, e.g. melamine resin, and pressed into laminate, again there will be a hard, cured resin surface above the particles, and in addition no conductive path for the passage of electrons through the middle and bottom parts of the resin-impregnated paper layer forming the decorative layer of the resultant laminate, and therefore again there will be no path for the discharge of static electricity.

Second, the coated flakes used in USP '039 tend to obscure the design or color of the decor sheet, especially if coated on the surface of the decor paper and if they posses color. The flakes tend to align parallel to the plane of the paper; thus, even though the flakes are small, their accumulated effect is to at least partly block the light path to the surface of the paper. If the decor sheet is simply a solid color, the metal oxide coated conductive flakes will often change the color, as these flakes themselves possess color. If the decor sheet has a pattern printed on its surface, the conductive flakes tend to obscure the pattern.

It is, accordingly, an object of the invention to overcome deficiencies of the prior art, such as those indicated above.

It is another object to provide for the safe and effective dissipation of static electricity from work tables, especially work tables for the assembly of electronic components.

A further object is to provide an improved static dissipative, high pressure decorative laminate having a controlled surface resistivity over a relatively narrow range of about 10⁶ to 10⁹ ohms/square, over a large range of relative humidity, including relative humidities as low as 10%.

Still another object is to provide an improved static dissipative, high pressure decorative laminate which simultaneously has more consistent static dissipative properties regardless of the relative humidity of the surrounding air, an attractive decorative appearance, and excellent abrasion resistance.

It is still a further object to provide an attractive static dissipative laminate which looks like normal high pressure decorative laminate having good heat resistance, water resistance, stain resistance, abrasion resistance and meets as well all other NEMA standards, has improved static dissipative properties at very low relative humidities, i.e. below 25%, and which has a good surface transparency so that decorative properties of the laminate are not lost or significantly diminished.

These and other objects and advantages of the present invention are achieved by incorporating with the laminating resin into the uppermost layer of the laminate, i.e. either the decor layer when the laminate has no overlay, or both the decor and overlay layers when both are present, a small amount of a conductive sub-micron powder which does not obscure the decorative nature of the decor layer.

Static dissipative, high pressure decorative laminates in accordance with the present invention can be made starting with any of the constructions of the aforementioned U.S. patents to Ungar '908, Wyche '721 and O'Dell '876, with the addition of an intrinsically electrically conductive sub-micron powder impregnated with the laminating resin into the top layer or layers of the static dissipative laminate to deliver the required static dissipative properties at very low relative humidity conditions. Accordingly, the disclosures of the aforementioned Ungar '908, Wyche '721 and O'Dell '876 patents are hereby incorporated by reference. Regardless, and in accordance with conventional high pressure decorative laminate construction, the laminate will comprise two or more phenolic resin (phenol-formaldehyde resin) impregnated core sheets, covered with a melamine resin (melamine-formaldehyde resin) decor sheet either having an abrasion resistant top coating or covered with a melamine resin impregnated alpha-cellulose paper overlay which itself is optionally provided with an abrasion resistant top coating.

The decor sheet may be solid colored or may have a design printed on its upper surface in accordance with conventional practice, and is preferably formed of alpha-cellulose paper impregnated with an aqueous solution of melamine resin in the-usual way. To give this layer after formation of the laminate the desired abrasion resistance, an ultra-thin abrasion resistant layer may be provided consistent with USP 4,255,480 or USP 4,713,138, hereby both incorporated by reference. To make the laminate scuff resistant, the ultra-thin coating may be further modified to contain solid lubricant in accordance with USP 4,567,087, hereby incorporated by reference. Alternatively, a melamine resin impregnated alpha-cellulose overlay may be placed over the decor layer, especially for improved gouge resistance; or to obtain both improved gouge resistance and abrasion resistance, an overlay having an ultra-thin abrasion resistant coating may be provided. Yet another alternative providing excellent gouge and abrasion resistance is taught by USP 5,344,704, hereby incorporated by reference.

To provide static dissipative properties, the core sheets may be carbon impregnated according to the aforementioned USP '908, some of the core layers may contain carbon fibers according to the aforementioned USP '876, or some of the core layers may contain metal fibers according to the aforementioned USP '721, and with at least the uppermost layer or layers of the laminate containing an ionic salt and humectant as per USP '908. In accordance with the present invention, the melamine resin impregnant for the decor sheet and for the overlay, if the latter is present, further contains a small amount of conductive sub-micron powder in an amount of 3-13% by weight based on the total weight of melamine resin solids in the liquid impregnating resin, preferably 4-10% by weight and most preferably 5-9% by weight. In terms of application rate, the sub-micron conductive powder may be suitably applied at a rate of 4.9 to 8.2 grams/m², although the application rate can be varied.

Proper selection of the sub-micron conductive powder is very important. For example, for most purposes the aforementioned Dupont Zelec ECP powder is unsatisfactory for the present invention, because it tends to opacify the cured resin, and therefore suffers from one of the deficiencies of carbon black. On the other hand, Zelec ECP powder can be used in the present invention in those limited cases where the decor sheet is without a decorative pattern printed on its surface and is of a solid and relatively dark color, particularly blue, gray or green.

The preferred sub-micron conductive powders for use in accordance with the present invention are the STANOSTAT powders, and most particularly STANOSTAT CP 30 E from Magnesium Elektron, Inc. This material has an average particle size of 0.30 µm and a surface area (BET) of 8.0 M²/g. Its color is white to off-white, and it is a doped metal oxide having a composition of 90-97% tin (4+) oxide and 10-3% antimony oxide. It provides low surface resistivity and does not opacify the cured melamine resin, as its index of refraction is approximately the same as the index of refraction of the cured melamine resin.

Other electroconductive powders can be routinely tested to determine their suitability for use in the present invention. In this regard, the sub-micron conductive powders suitable for use in the present invention must not only be capable of improving the static dissipative property of the laminate at low relative humidity, and also desirably provide little or no obscuring of the pattern or color of the decor sheet, but such submicron particles must not interfere with the other NEMA requirements of the high pressure decorative laminate. In addition, and in order for the aforementioned properties and characteristics to be achieved, the sub-micron conductive powder must be capable of withstanding the relatively extreme conditions to which the laminate assembly is subjected during the lamination process, and in particular relatively high curing temperatures under high pressure, e.g. 140°-150°C under 1000-1200 psi for up to one-half hour or even longer, without undergoing degradation or other damage.

As indicated above, the quantity of conductive sub-micron powder in the decor sheet, and also in the overlay if present, is kept low, i.e. in general no more than 13% based on the weight of melamine solids in the melamine impregnating solution. When the conductive sub-micron powder is the preferred STANOSTAT CP 30 E, the maximum quantity should be no more than about 10% by weight. Greater amounts of less conductive particles may sometimes be desirable, but quantities greater than about 13% will begin to adversely affect transparency. Moreover, as the conductive powder material is expensive, there is a disadvantage in using more than is necessary to obtain the desired results.

The quantities and identities of the other components, principally humectant, such as glycerin or aliphatic tertiary amine, and ionic salt such as lithium chloride, also have an effect on the quantity of sub-micron conductive powder. Lastly, care must be taken to prevent the addition of so much conductive material as to bring the laminate into the conductive range of less than 10⁶ ohms. In general, and especially when using the optimum amounts of humectant and ionic salt as per Ungar USP '908 and the preferred STANOSTAT conductive sub-micron powders of the present invention, the quantity of such sub-micron powder will most preferably be in the 6-9% by weight range.

Incorporation of the conductive sub-micron particles in the laminating resin is essential to obtaining a satisfactory static dissipative laminate which retains excellent static dissipative properties even at very low relative humidities. This is so because the conductive sub-micron particles are then distributed throughout the thickness of the upper layer or layers of the resultant laminate, including the hard surface coating provided by the cured melamine resin, and regardless of whether or not such surface layer is provided with enhanced abrasion resistance as per USP '480, USP '138 or USP '704. In other words, the conductive sub-micron particles end up everywhere the resin penetrates, the resin providing a matrix for the sub-micron particles throughout the entire thickness of the upper layer or layers of the resultant static dissipative laminate.

The following examples will illustrate the manner in which the invention can be practiced. It is to be understood that these examples are not to be considered limiting of the invention, but are offered illustratively.

### Example 1

Control laminates were made and tested for static dissipative properties at different levels of relative humidity. The control laminates were made in accordance with USP '087 with an abrasion resistant decor sheet which may be a solid color or may have a design printed on its upper surface. The decor sheet was saturated with an aqueous solution of melamine formaldehyde resin to 50-55% resin content and 5-7% volatile content.

The core of the laminates comprised four phenol-formaldehyde impregnated Kraft paper (254 g/m² basis weight), the bottom two of which were modified by the addition of 4% lithium chloride on the basis of phenolic solids, and the upper two containing carbon fibers.

The control laminates were pressed at 143-149°F and a pressure of 1,000-1,200 psi in a multi-opening press. The laminates were then tested for electrical properties at 50% RH (relative humidity) and 10% RH. The results on the electrical testing are tabulated in Table 1 and are each an average of four readings.

**Table 1**

| Control Laminate | | Surface Resistance (Point-Point) (ohms) | Point-Ground Resistance (ohms) | Volume Resistance (ohms) |
|---|---|---|---|---|
| 1 | 50% RH | 3.3 x 10¹¹ | 2.3 x 10¹¹ | 3.6 x 10¹⁰ |
| | 10% RH | 2.2 x 10¹² | 6.5 x 10¹¹ | 7.1 x 10¹⁰ |
| 2 | 50% RH | 4.5 x 10¹¹ | 3.8 x 10¹¹ | 4.1 x 10¹⁰ |
| | 10% RH | 1.8 x 10¹² | 6.8 x 10¹¹ | 8.5 x 10¹⁰ |

None of the above laminates are suitable for use in static dissipative work surfaces at the relative humidities tested as both the surface and volume resistance are well outside the static dissipative range of 10⁶ to 10⁹ ohms. The presence of carbon fibers filled conductive core also does not provide the desired low RH electrical properties.

### Example 2

The next set of samples were made similar to Example 1, except that the melamine formaldehyde resin used to impregnate the top decor sheet was modified by the addition of 2.5% by weight of an ionic salt and 5% by weight of glycerin as a humectant based on melamine-formaldehyde resin solids. The modified resin is denoted below as MR-1. The decor sheet in this case was only solid colors. The core of the laminates had the same construction as described in Example 1.

The samples were tested for electrical properties against a control (laminate made as described in Example 1) at 50% RH and 10% RH conditions. The results on the electrical testing are tabulated in Table 2. The results on Sample 2 (made with MR-1) correspond to an average of four laminates produced under identical operating conditions.

**Table 2**

| Sample | | Surface Resistance (Point-Point) (ohms) | Point-Ground Resistance (ohms) | Volume Resistance (ohms) |
|---|---|---|---|---|
| 1 (Control) | 50% RH | 3.3 x 10¹¹ | 4.1 x 10¹¹ | 5.6 x 10¹⁰ |
| | 10% RH | 2.5 x 10¹² | 6.5 x 10¹¹ | 8.4 x 10¹⁰ |
| 2 (MR-1) | 50% RH | 4.5 x 10⁷ | 2.8 x 10⁷ | 6.5 x 10⁸ |
| | 10% RH | 5.8 x 10¹⁰ | 5.2 x 10¹⁰ | 8.0 x 10¹⁰ |

The tests show that the addition of an ionic salt and an aliphatic tertiary amine as a humectant to the melamine formaldehyde resin provide satisfactory electrical properties within the static dissipative range at 50% RH. However, at 10% RH, the samples made with the modified melamine resin are unsuitable for use as static dissipative worktops and behave close to the control.

### Example 3

Four samples were prepared similar to Example 2, except that the melamine formaldehyde resin was further modified by adding 5% by weight of 10 micron Activated Alumina (source: Alcan chemicals) based on resin solids in addition to 2.5% by weight of the ionic salt and 5% by weight of glycerin again based on total resin solids. The activated alumina has the capacity to absorb a large quantity of water due to its high surface area and pore volume and thus functions as an effective humectant. This resin is denoted below as MR-2. The decor sheet in this case was only solid colors. The core construction was identical to that described in Example 1.

The samples mentioned above were tested for electrical properties against a control, which was made as explained in Example 2 using MR-1. The readings on Sample 2 (made with MR-2) correspond to an average of four laminates produced under identical conditions.

**Table 3**

| Sample | | Surface Resistance (Point-Point) (ohms) | Point-Ground Resistance (ohms) | Volume Resistance (ohms) |
|---|---|---|---|---|
| 1 (Control) (MR-1) | 50% RH | 5.3 x 10⁷ | 3.0 x 10⁷ | 5.5 x 10⁸ |
| | 10% RH | 4.2 x 10¹⁰ | 6.6 x 10¹⁰ | 7.5 x 10¹⁰ |
| 2 (MR-2) | 50% RH | 1.1 x 10⁷ | 8.8 x 10⁶ | 1.5 x 10⁸ |
| | 10% RH | 3.8 x 10¹⁰ | 2.5 x 10¹⁰ | 6.5 x 10¹⁰ |

The results tabulated above indicate that the addition of activated alumina to the modified resin improves the electrical properties (drops the resistance by almost a factor of 5) at 50% RH, but still there is no significant improvement at 10% RH. The MR-2 samples still show static dissipative properties well outside the static dissipative range at 10% RH and are unsuitable for use as static dissipative worktops at these low humidities.

### Example 4

A series of four static dissipative laminates according to the present invention were made using solid colored decor sheets having an ultra-thin abrasion resistant surface and impregnated with melamine formaldehyde resin containing 5% by weight of STANOSTAT CP 30 E sub-micron electroconductive metal oxide powder (source: MEI Chemicals) and 5% by weight of the glycerin based on total resin solids. No ionic salts were added to'the resin formulation. This modified melamine resin formulation is denoted as MR-3. The core construction was the same as described in Example 1.

The samples were tested for electrical properties against a control, which was made as explained in Example 2. The average readings of the electrical tests on the four laminates made with MR-3 are shown below in Table 4 under the sample name "Invention(MR-3)" .

**Table 4**

| Sample | | Surface Resistance (Point-Point) (ohms) | Point-Ground Resistance (ohms) | Volume Resistance (ohms) |
|---|---|---|---|---|
| Control (MR-1) | 50% RH | 4.0 x 10⁷ | 1.8 x 10⁷ | 4.4 x 10⁸ |
| | 10% RH | 8.0 x 10¹⁰ | 5.0 x 10¹⁰ | 6.7 x 10¹⁰ |
| Invention (MR-3) | 50% RH | 7.5 x 10⁶ | 6.8 x 10⁶ | 1.3 x 10⁸ |
| | 10% RH | 9.0 x 10⁸ | 8.5 x 10⁸ | 6.6 x 10⁹ |

The MR-3 laminates according to the present invention show a definite improvement over the control and all other samples mentioned in the previous examples. The laminates are well within the static dissipative range at 50% RH. However, at 10% RH the surface resistance and point-to-ground resistance values are very close to the upper limit (1 x 10⁹ ohms) of the static dissipative range (1 x 10⁶ to 1 x 10⁹ ohms), and the volume resistance is slightly higher than desirable. The laminates need to be improved to bring the volume resistance in spec at 10% RH and also bring the other resistances well within the static dissipative range.

### Example 5

In an effort to further improve the electrical properties of the invention, four laminate samples were made with four different solid colored decor sheets impregnated with melamine formaldehyde resin containing 7% by weight (5.7 g/m²) of the same sub-micron electroconductive metal oxide powder (source: MEI Chemicals), 5% by weight of the glycerin and 2.5% by weight of ionic salt based on total resin solids. This resin is denoted as MR-4. The core construction was the same as described in Example 1.

The samples were tested for electrical properties against a control, which was made as explained in Example 2. The average readings of the electrical tests on the four laminates made with MR-4 are shown below in Table 4 under the sample name "Invention(MR-4)" against the control values.

**Table 5**

| Sample | | Surface Resistance . (Point-Point) (ohms) | Point-Ground Resistance (ohms) | Volume Resistance (ohms) |
|---|---|---|---|---|
| Control (MR-1) | 50% RH | 3.5 x 10⁷ | 1.6 x 10⁷ | 5.3 x 10⁸ |
| | 10% RH | 6.4 x 10¹⁰ | 5.6 x 10¹⁰ | 7.5 x 10¹⁰ |
| Invention (MR-4) | 50% RH | 2.1 x 10⁶ | 1.7 x 10⁶ | 2.5 x 10⁷ |
| | 10% RH | 1.8 x 10⁸ | 1.5 x 10⁸ | 8.0 x 10⁸ |

The MR-4 laminate according to the present invention displays electrical properties within the static dissipative range at both 50% RH and 10% RH. The ionic salt dissolved in melamine resin was necessary to maintain electrical continuity in the "thickness" direction of the laminate. This further helps to reduce the overall volume resistance. The laminates therefore provide effective static dissipation as static dissipative worktops over a wide range of relative humidities (10% RH to 60% RH) and also meet the proposed military and civil specifications on static dissipative work surfaces.

### Example 6

Four laminate samples were prepared similar to Example 2, except that the melamine formaldehyde resin (MR-1) was further modified by adding 5% by weight of Zelec ECP 1410-M based on resin solids. Zelec ECP 1410-M is an electroconductive powder from DuPont which consists of an antimony-doped tin oxide conductive layer over a mica core. The above conductive powder was added in addition to 2.5% by weight of an ionic salt and 5% by weight of glycerin based on total resin solids. This new resin is denoted as MR-5. The decor sheets in this example were solid colors, namely: Gray, Almond, White and Biege. The core construction was identical to that described in Example 1.

The resulting laminates using the conductive pigment showed surface opacity as the inherent gray color of the ZELEC pigment obscured the decorative colored surface of the laminate. Out of the four solid colors stated above, only the gray laminate was acceptable as it blended well with the color introduced by the conductive pigment; the other three samples were commercially unacceptable from a decorative perspective.

The four laminates, however, were subjected to electrical testing against a control (made as explained in Example 2) to determine their static dissipative properties at 50% R.H and 10% R.H. The average readings of the electrical tests on the four laminates made with MR-5 are shown below in Table 6 under Sample 2.

**Table 6**

| Sample | | Surface Resistance (Point-Point) (ohms) | Point-Ground Resistance (ohms) | Volume Resistance (ohms) |
|---|---|---|---|---|
| 1 (Control) (MR-1) | 50% RH | 3.8 x 10⁷ | 2.5 x 10⁷ | 6.1 x 10⁸ |
| | 10% RH | 7.5 x 10¹⁰ | 6.5 x 10¹⁰ | 8.0 x 10¹⁰ |
| 2 (MR-5) | 50% RH | 5.1 x 10⁶ | 3.3 x 10⁶ | 7.7 x 10⁷ |
| | 10% RH | 4.0 x 10⁸ | 2.2 x 10⁸ | 1.1 x 10⁹ |

The laminates with ZELEC electroconductive powder, according to the above tabulation, demonstrate good static dissipative properties close within the static dissipative range at both 50% and 10% R.H. They are also a definite improvement over the control. Though the laminates provide effective static dissipation, the conductive pigment used provides undesirable opacity to the decorative surface of the laminate.

## Claims

1. A static dissipative, high pressure decorative laminate meeting NEMA standards, comprising at least two phenolic resin impregnated core layers optionally containing an ionic salt, at least one of which contains conductive particles or conductive fibers, and a melamine resin impregnated decor layer above said core layers, and an optional melamine resin impregnated overlay above said decor layer, said melamine resin impregnated decor layer and said optional overlay containing a humectant and optionally an ionic salt, **characterized in that**:
said resin impregnated within and on said decor layer and said optional overlay contains an amount of submicron metal oxide conductive particles sufficient to provide said laminate with a surface resistivity within the range of 10⁶ to 10⁹ ohms at a relative humidity of 10%, without substantially obscuring said decor layer.

2. A static dissipative, high pressure decorative laminate according to claim 1 wherein said sub-micron metal oxide conductive particles are present in said melamine resin in an amount of 3-13%, preferably 5-10%, most preferably 6-9%, by weight based on the total weight of melamine resin solids.

3. A static dissipative, high pressure decorative laminate according to claims 1 or 2, wherein said metal oxide sub-micron particles are in powder form and are composed of a mixture of 90-97% tin oxide and 10-3% of antimony oxide.

4. A static dissipative, high pressure decorative laminate according to any of claims 1-3, wherein said conductive metal oxide particles have a refractive index approximately the same as cured melamine resin.

5. A static disspative, high pressure decorative laminate according to any of claims 1-4, wherein said ionic salt is present in at least one of said core layers, said decor layer and said optional overlay.

6. A static dissipative, high pressure decorative laminate according to claim 5, wherein said ionic salt is present in each of said decor layer, said optional overlay, and at least one core layer.

7. A static dissipative, high pressure decorative laminate according to any of claims 1-4 without said ionic salt in said decor layer and optional overlay, and wherein said conductive sub-micron conductive particles are present in said melamine resin in an amount of at least 5%, preferably at least 6%, by weight based on the weight of melamine resin solids.

8. A resin impregnated paper sheet for use as an upper ply in the manufacture of a static dissipative, high pressure decorative laminate meeting NEMA standards, said sheet comprising a paper substrate and a curable resin impregnated within and coating said paper substrate, **characterized in that**:
said curable resin contains 3-13% by weight, based on the total weight of curable resin solids, of sub-micron metal oxide conductive particles, and optionally a humectant and an ionic salt.

9. A resin impregnated paper sheet according to claim 8 wherein said paper is alpha-cellulose paper.

10. A paper sheet according to claim 8 or 9 wherein said conductive metal oxide sub-micron particles are present in an amount of 5-10% by weight based on the weight of solids of said curable resin, and wherein said humectant and ionic salt are also present in said curable resin.

11. A method of making a resin impregnated sheet according to any of claims 8-10 comprising saturating said paper with said resin and drying said paper, **characterized in that**:
prior to said saturating, said curable resin is mixed with said sub-micron metal oxide conductive particles.

12. A method of making a static dissipative, high pressure decorative laminate meeting NEMA standards, comprising assembling at least two phenolic resin impregnated core layers optionally containing an ionic salt, at least one of which contains conductive particles or conductive fibers, and a melamine resin impregnated decor layer above said core layers, and optionally a melamine resin impregnated overlay above said decor layer, said melamine resin impregnated decor layer and said optional overlay containing a humectant and optionally an ionic salt; and pressing said assembly under heat and pressure, **characterized in that**:
said decor layer and said optional overlay, if present, are in accordance with any of claims 8 to 10.

## Patentansprüche

1. Statische Elektrizität dissipierende, den NEMA-Standards genügende, dekorative Hochdrucklaminate, umfassend wenigstens zwei mit Phenolharzen imprägnierte, wahlweise ein ionisches Salz enthaltende Kernschichten, von denen wenigstens eine leitfähige Teilchen oder leitfähige Fasern enthält, sowie eine mit einem Melaminharz imprägnierte Dekorschicht über den genannten Kernschichten und eine wahlweise mit einem Melaminharz imprägnierte Auflage über der Dekorschicht, wobei die mit einem Melaminharz imprägnierte Dekorschicht und die wahlweise Auflage, enthaltend ein Feuchthaltemittel und wahlweise ein ionisches Salz, **dadurch gekennzeichnet sind, dass** das in und auf die Dekorschicht und die wahlweise Auflage imprägnierte Harz eine Menge an leitfähigen Submikron-Metalloxidteilchen enthält, die ausreicht, um das Laminat mit einem spezifischen Oberflächenwiderstand innerhalb des Bereichs von 10⁶ bis 10⁹ Ohm bei einer relativen Feuchtigkeit von 10% zu versehen, ohne dass in wesentlichem Maße die Dekorschicht verborgen wird.

2. Statische Elektrizität dissipierende, dekorative Hochdrucklaminate nach Anspruch 1, wobei die leitfähigen Submikron-Metalloxidteilchen in dem Melaminharz in einer Menge von 3 bis 13 %, vorzugsweise 5 bis 10 %, am stärksten bevorzugt 6 bis 9 %, bezogen auf das Gesamtgewicht der Melaminharzfeststoffe, vorhanden sind.

3. Statische Elektrizität dissipierende, dekorative Hochdrucklaminate nach Anspruch 1 oder 2, wobei die Submikron-Metalloxidteilchen in Pulverform vorliegen und sich aus einer Mischung von 90 bis 97 % Zinnoxid und 10 bis 3 % Antimonoxid zusammensetzen.

4. Statische Elektrizität dissipierende, dekorative Hochdrucklaminate nach einem der Ansprüche 1 bis 3, wobei die leitfähigen Metalloxidteilchen einen Refraktionsindex von ungefähr dem gleichen wie dem eines gehärteten Melaminharzes aufweisen.

5. Statische Elektrizität dissipierende, dekorative Hochdrucklaminate nach einem der Ansprüche 1 bis 4, wobei das ionische Salz in wenigstens einer der Schichten, nämlich der Kernschichten, der Dekorschicht und der wahlweisen Auflage vorhanden ist.

6. Statische Elektrizität dissipierende, dekorative Hochdrucklaminate nach Anspruch 5, wobei das ionische Salz in jeder der Schichten, nämlich der Dekorschicht, der wahlweisen Auflage und wenigstens einer der Kernschichten vorhanden ist.

7. Statische Elektrizität dissipierende, dekorative Hochdrucklaminate nach einem der Ansprüche 1 bis 4, jedoch ohne das ionische Salz in der Dekorschicht und der wahlweisen Auflage, wobei die leitfähigen Submikron-Teilchen in dem Melaminharz in einer Menge von wenigsten 5 %, vorzugsweise wenigstens 6 %, bezogen auf das Gewicht der Melaminharzfeststoffe, vorhanden sind.

8. Mit Harz imprägniertes Papierblatt zur Verwendung als obere Lage bei der Herstellung eines statische Elektrizität dissipierenden, den NEMA-Standards genügenden, dekorativen Hochdrucklaminats, wobei das Blatt ein Papiersubstrat und ein einimprägniertes und das Papiersubstrat beschichtendes härtbares Harz umfasst, **gekennzeichnet dadurch, dass** das härtbare Harz 3 bis 13 %, bezogen auf das Gesamtgewicht an Feststoffen des härtbaren Harzes, an leitfähigen Submikron-Metalloxidteilchen und wahlweise eines Feuchthaltemittels und eines ionischen Salzes enthält.

9. Mit Harz imprägniertes Papierblatt nach Anspruch 8, wobei das Papier alpha-Cellulosepapier ist.

10. Mit Harz imprägniertes Papierblatt nach Anspruch 8 oder 9, wobei die leitfähigen Submikron-Metalloxidteilchen in einer Menge von 5 bis 10 %, bezogen auf das Gewicht an Feststoffen des härtbaren Harzes, vorhanden sind und wobei das Feuchthaltemittel und das ionische Salz auch in dem härtbaren Harz vorhanden sind.

11. Verfahren zum Herstellen eines mit einem Harz imprägnierten Blatts nach einem der Ansprüche 8 bis 10, umfassend Absättigen des Papiers mit dem Harz und Trocknen des Papiers, **gekennzeichnet dadurch, dass** vor dem Absättigen das härtbare Harz mit den leitfähigen Submikron-Metalloxidteilchen gemischt wird.

12. Verfahren zum Herstellen eines statische Elektrizität dissipierenden, den NEMA-Standards genügenden, dekorativen Hochdrucklaminats, wobei das Verfahren umfasst, dass wenigstens zwei mit Phenolharzen imprägnierte, wahlweise ein ionisches Salz enthaltende Kernschichten, von denen wenigstens eine leitfähige Teilchen oder leitfähige Fasern enthält, sowie eine mit Melaminharz imprägnierte Dekorschicht über den genannten Kernschichten und wahlweise eine mit einem Melaminharz imprägnierte Auflage über der Dekorschicht zusammengefügt werden, wobei die mit einem Melaminharz imprägnierte Dekorschicht und die wahlweise Auflage ein Feuchthaltemittel und wahlweise ein ionisches Salz enthalten, und diese Anordnung unter Wärme und Druck gepresst werden, **gekennzeichnet dadurch, dass** die Dekorschicht und die wahlweise Auflage, sofern vorhanden, diejenigen gemäß einem der Ansprüche 8 bis 10 sind.

## Revendications

1. Stratifié décoratif haute pression, dissipant l'électricité statique et satisfaisant aux normes NEMA, comprenant au moins deux couches de coeur qui sont imprégnées de résine phénolique et contiennent éventuellement un sel ionique, et dont au moins l'une contient des particules conductrices ou des fibres conductrices, et une couche de décor imprégnée de résine de mélamine et placée sur lesdites couches de coeur, ainsi qu'une éventuelle surcouche imprégnée de résine de mélamine et placée sur ladite couche de décor, cette couche de décor imprégnée de résine de mélamine et ladite surcouche contenant un agent humectant ainsi que, éventuellement, un sel ionique,
**caractérisé en ce que**
ladite résine dont sont imprégnées ladite couche de décor et ladite éventuelle surcouche contient des particules conductrices inframicroniques d'oxyde métallique en une quantité suffisante pour conférer au stratifié une résistivité de surface de 10⁶ à 10⁹ ohms sous une humidité relative de 10 %, sans que ladite couche de décor en soit sensiblement assombrie.

2. Stratifié décoratif haute pression et dissipant l'électricité statique, conforme à la revendication 1, dans lequel lesdites particules conductrices inframicroniques d'oxyde métallique se trouvent, dans ladite résine de mélamine, en une proportion pondérale de 3 à 13 %, de préférence de 5 à 10 % et mieux encore de 6 à 9 %, par rapport au poids total des solides de la résine de mélamine.

3. Stratifié décoratif haute pression et dissipant l'électricité statique, conforme à la revendication 1 ou 2, dans lequel lesdites particules conductrices inframicroniques d'oxyde métallique se trouvent sous la forme d'une poudre constituée d'un mélange de 90 à 97 % d'oxyde d'étain et de 10 à 3 % d'oxyde d'antimoine.

4. Stratifié décoratif haute pression et dissipant l'électricité statique, conforme à l'une des revendications 1 à 3, dans lequel lesdites particules conductrices inframicroniques d'oxyde métallique présentent un indice de réfraction à peu près égal à celui de la résine de mélamine durcie.

5. Stratifié décoratif haute pression et dissipant l'électricité statique, conforme à l'une des revendications 1 à 4, dans lequel il y a un sel ionique dans l'une au moins desdites couches de coeur, couche de décor et surcouche éventuelle.

6. Stratifié décoratif haute pression et dissipant l'électricité statique, conforme à la revendication 5, dans lequel il y a un sel ionique dans chacune desdites couche de décor et surcouche éventuelle, ainsi que dans l'une au moins desdites couches de coeur.

7. Stratifié décoratif haute pression et dissipant l'électricité statique, conforme à l'une des revendications 1 à 4, dans lequel il n'y a pas de sel ionique dans lesdites couche de décor et surcouche éventuelle, et dans lequel lesdites particules conductrices inframicroniques se trouvent, dans ladite résine de mélamine, en une proportion pondérale d'au moins 5 % et de préférence d'au moins 6 % par rapport au poids des solides de la résine de mélamine.

8. Feuille de papier imprégnée de résine, destinée à être employée comme pli supérieur dans la fabrication d'un stratifié décoratif haute pression, dissipant l'électricité statique et satisfaisant aux normes NEMA, cette feuille comprenant un substrat de papier et une résine durcissable imprégnant et revêtant ce substrat de papier,
**caractérisée en ce que**
ladite résine durcissable contient des particules conductrices inframicroniques d'oxyde métallique, en une proportion pondérale de 3 à 13 % par rapport au poids total des solides de la résine durcissable, ainsi que, éventuellement, un agent humectant et un sel ionique.

9. Feuille de papier imprégnée de résine, conforme à la revendication 8, dans laquelle ledit papier est un papier d'alpha-cellulose.

10. Feuille de papier conforme à la revendication 8 ou 9, dans laquelle lesdites particules conductrices inframicroniques d'oxyde métallique se trouvent en une proportion pondérale de 5 à 10 % par rapport au poids des solides de ladite résine durcissable, et dans laquelle il y a aussi un agent humectant et un sel ionique dans ladite résine durcissable.

11. Procédé de fabrication de feuilles imprégnées de résine, conformes à l'une des revendications 8 à 10, lequel procédé comporte le fait de saturer de ladite résine ledit papier et de le faire sécher,
**caractérisé en ce que**,
avant cette opération de saturation, on mélange ladite résine durcissable avec lesdites particules conductrices inframicroniques d'oxyde métallique.

12. Procédé de fabrication de stratifiés décoratifs haute pression, dissipant l'électricité statique et satisfaisant aux normes NEMA, lequel procédé comporte le fait d'assembler au moins deux couches de coeur qui sont imprégnées de résine phénolique et contiennent éventuellement un sel ionique, et dont au moins l'une contient des particules conductrices ou des fibres conductrices, et une couche de décor imprégnée de résine de mélamine et placée sur lesdites couches de coeur, ainsi qu'une éventuelle surcouche imprégnée de résine de mélamine et placée sur ladite couche de décor, cette couche de décor imprégnée de résine de mélamine et ladite surcouche contenant un agent humectant ainsi que, éventuellement, un sel ionique, et le fait de presser à chaud et sous pression l'assemblage ainsi obtenu,
**caractérisé en ce que**
ladite couche de décor et ladite éventuelle surcouche, si celle-ci est présente, sont conformes à l'une des revendications 8 à 10.
